# EUROPÄISCHE PATENTSCHRIFT

(11) **EP 0 978 620 B1**
(45) Veröffentlichungstag und Bekanntmachung des Hinweises auf die Patenterteilung: **03.03.2010**
(21) Anmeldenummer: 99112548.5
(22) Anmeldetag: 01.07.1999
(51) Int. Cl.: E06B 3/66

(54) **Isolierglaselement für die Gebäudeverglasung**
Insulating glass element for the glazing of buildings
Elément de verre isolant pour vitrage

(30) Priorität: 02.07.1998 DE 19829480
(43) Veröffentlichungstag der Anmeldung: 09.02.2000
(73) Patentinhaber: Kunert, Heinz, Dr., 50935 Köln (DE)
(72) Erfinder: Kunert, Heinz, Dr., 50935 Köln (DE)
(74) Vertreter: Christophersen & Partner

(56) Entgegenhaltungen:
- DE-A- 3 614 978
- DE-A- 4 125 834
- DE-A- 4 401 675

## Beschreibung

Die Erfindung betrifft ein Isolierglaselement für die Gebäudeverglasung mit höherer Nutzung der solaren Strahlungsenergie aus einer Weißglasscheibe und einer dazu mit Abstand angeordneten, weiteren Glasscheibenanordnung.

In der deutschen Offenlegungsschrift 28 29 523 ist ein Fensterscheiben-Sonnenkollektor beschrieben, der aus einer außen angeordneten Kristallspiegelglasscheibe und einer mit Abstand dazu angeordneten, dickeren, in ihrer Masse grün eingefärbten Innenraumglasscheibe besteht. Die Kristallspiegelglasscheibe trägt auf ihrer Innenseite eine Selektivbeschichtung, die nur die kurzwelligen Lichtstrahlen von außen durchläßt, aber langwellige Wärmestrahlung nach außen nicht abgibt. Mit dieser Anordnung soll die Sonnenenergie, die auf den Fensterscheiben-Sonnenkollektor trifft, in nutzbare Wärme umgewandelt und ohne Transmissions- und Speicherwärmeverluste direkt an das Rauminnere abgegeben oder einer Gebrauchswassererwärmung zugeführt werden.

In der DE 41 25 834 C2 desselben Anmelders ist ein derartiges Isolierglaselement beschrieben, das für den Durchgang von solarer Energiestrahlung je nach Positionierung zur Strahlungsquelle unterschiedliche Transmissionseigenschaften aufweist. Dieses Isolierglaselement läßt sich je nach Positionierung der Absorptionsscheibe zur Strahlungsquelle hin im Sommer als Sonnenschutzelement mit einem geringen Strahlungsenergiedurchgang, im Winter dagegen als Solarkollektorelement mit einem hohem solaren Strahlungsenergiedurchgang nutzen. Dieses bekannte Isolierglaselement weist einen Wärmedämmwert von annähernd k = 1,0 W/m²K auf und ist in einer Fensterrahmung drehbar um 180° gelagert, so daß die Isolierglasscheibe nach Wahl mit der einen oder anderen ihrer Oberflächen zur Außenseite eines Raumes weisen kann. Hierdurch lassen sich die Kosten für die Klimatisierung von mit derartigen Isolierglasscheiben ausgerüsteten Räumen sowohl im Winter als auch im Sommer vermindern.

Die in der Sommerposition nach außen weisende, hinsichtlich des vorwiegend im nicht sichtbaren Bereichs der Sonnenstrahlung selektiv ausgebildete Absorptionsscheibe des Isolierglaselements absorbiert die nicht sichtbaren Anteile des solaren Energiespektrums und wandelt sie in Wärmeenergie um, die konvektiv und über Strahlung an die Außenatmosphäre abgeführt wird. Der gesamte Energiedurchlaßgrad beträgt in dieser Stellung bei dem o. g. k-Wert nur etwa g = 0,35.

In der Winterposition ist die eisenoxidfreie bzw. eisenoxidreduzierte Weißglasscheibe nach außen und die selektive Absorptionsscheibe zum Innenraum hin gewandt. Die Sonnenstrahlung durchdringt das nach außen gewandte Weißglas und trifft ohne nennenswerte Absorptionsverluste auf die selektiv absorptive Glasscheibe. Diese Glasscheibe wandelt etwa 50 % des solaren Spektrums, vorwiegend im nicht sichtbaren Bereich, in langwellige Wärmestrahlung um, die dann, behindert durch eine dem Scheibenzwischenraum zugewandte, die Emission langwelliger Wärmestrahlung mindernde Beschichtung (low-E-Beschichtung) und eine Edelgasfüllung im Scheibenzwischenraum fast ausschließlich in das Rauminnere abgestrahlt wird.

Der Gesamtenergiedurchlaß bei Sonneneinstrahlung beträgt in der Winterposition fast g = 0,8 bei demselben k-Wert von annähernd k = 1,0 W/m²K.

Dieses Konzept, das sich als Solardiode bezeichnen läßt und eine mechanische Umpolung des Strahlungsflusses des Isolierglaselements beinhaltet, erlaubt eine thermische Nutzung des eingestrahlten solaren Energiepotentials zur Entlastung der Heizungsbilanz in den Winter- und Übergangsmonaten und verhindert eine übermäßige solare Einstrahlung in den Sommermonaten.

Trotz dieser bekannten, vorteilhaften Wirkungen des Isolierglaselements entsprechend DE 41 25 834 C2 wird nur der Wärmedämmfunktion, also dem Wärmedurchgangskoeffizienten von Isolierverglasungen in der herkömmlichen Bautechnik bei gläsernen Gebäudehüllflächen eine vorrangige Beachtung und Wertung zuteil, während der Gesamtenergiedurchlaß, d. h. die solare Nutzungsfunktion transparenter Glasflächen demgegenüber vernachlässigt wird.

Die Glasindustrie hat für großflächige Gebäudeverglasungen, d. h. für quasi gläserne Bauwerke bezüglich der Wärmedämmfunktion Isolierglaselemente mit hervorragenden Eigenschaften auf den Markt gebracht, die k-Werte von k = 1 W/m²K für zweischeibige Islolierglasgelemente und k-Werte von k = 0,7 bzw. 0,5 W/m²K für dreischeibige Isolierglaselemente aufweisen.

Erreicht werden diese Werte durch ein- oder zweiseitige Beschichtungen, die die Emission langwelliger, solarer Strahlung behindern sowie durch zusätzliche Edelgasfüllung der Scheibenzwischenräume. Hierbei werden jedoch erhebliche Verringerungen des g-Wertes, d. h. des Gesamtenergiedurchlaßwertes in Kauf genommen. Bei einem dreischeibigen Isolierglas werden nur noch Werte von g = 0,48 und darunter erreicht, was bedeutet, daß über 50 % der auf die Außenscheibe auftreffenden Sonnenstrahlen abgewiesen werden, die zur Erwärmung des Innenraumes somit nicht mehr zur Verfügung stehen.

Ungeachtet der energetischen Verluste aufgrund einer vernachlässigten Optimierung des g-Wertes zugunsten eines geringfügig verbesserten k-Wertes wird durch die Glasindustrie für diese Isolierglaskonzeption als Vorteil herausgestellt, daß sie sowohl für den winterlichen Wärmeschutz als auch für den sommerlichen Sonnenschutz geeignet sei. Dabei wird aber übersehen, daß eine Verbesserung des k-Wertes um 0,3 bzw. 0,5 W/m²K bei einer dreischeibigen gegenüber einer zweischeibigen Isolierverglasung mit einem k-Wert von k = 1 W/m²K, bezogen auf den erreichbaren energetischen Gewinn, jedenfalls im Bereich mitteleuropäischer Klimata, fast ohne Belang ist, wenn man ihn gegen den Verlust der solaren Einstrahlungsrate von 20 bis 30% aufrechnet. Diese Einstrahlungsrate beträgt in der Heizperiode der Winter- und Übergangsmonate nämlich selbst bei diffuser solarer Einstrahlung im Durchschnitt 100 bis 150 W/m² und bei direkter Einstrahlung 300 bis 600 W/m², die sich kompensatorisch in vorteilhafter Weise für die Raumheizung nutzen lassen. Hierbei ist allerdings zu beachten, dass die solare Einstrahlungsrate in den Winter- und Übergangsmonaten am Tage großen Schwankungen unterliegt und bei starker Bewölkung auf sehr geringe Werte absinken kann.

Im Zusammenhang mit der DE 41 25 834 C2 ist es bereits bekannt, dass die thermische Behaglichkeit entscheidend von der Temperatur der Wandflächen des Raumes beeinflusst wird. Selbst bei zureichender Raumlufttemperatur darf die Temperatur der Wandflächen des Raumes nicht unterhalb der der Raumluft absinken, wenn die Behaglichkeit nicht leiden soll. Bei Temperaturabweichungen partieller Raumflächenanteile, wie sie sich bei gläsernen Fensterfronten trotz gegebener, optimaler Wärmedämmwerte nicht vermeiden lassen, wird die Behaglichkeit bereits empfindlich beeinträchtigt. Ausgeglichene Wandtemperaturen sind auch zur Vermeidung konvektiver Luftströmungen eine wesentliche Voraussetzung für ein behagliches Raumklima. Wenn dieses gegeben ist, werden bereits Raumtemperaturen von 18°C als zureichend behaglich empfunden, so dass die Absenkung der Raumtemperatur von den üblicherweise erforderlichen Innenraumtemperaturen von 22°C auf 18°C eine erhebliche Heizkostenersparnis von ca. 25% erbringt.

Der Erfindung liegt das Problem zugrunde, die thermische Behaglichkeit von Innenräumen mit großen Fensterflächen durch Nutzung der solaren Einstrahlungsrate in den Winter- und Übergangsmonaten nachhaltig und weitgehend unabhängig von der augenblicklichen Witterung zu verbessern.

Ausgehend von dieser Problemstellung wird bei einem Isolierglaselement der eingangs erwähnten Art vorgeschlagen, dass es gemäß einer ersten Ausführungsform der Erfindung aus einer Weißglasscheibe mit äußerst geringem Eisenoxidanteil und einer dazu mit Abstand angeordneten, vorwiegend im nicht sichtbaren Bereich des solaren Strahlungsspektrums absorptiven, als Grünglasscheibe ausgebildeten Glasscheibenanordnung mit hoher Wärmekapazität, deren der Weißglasscheibe zugewandte Oberfläche mit einer die Emission langwelliger Wärmestrahlung mindernden Beschichtung (low-E-Beschichtung) versehen ist und mindestens etwa die doppelte Dicke der Weißglasscheibe aufweist, besteht.

Ausgehend von dieser Problemstellung wird bei einem Isolierglaselement der eingangs erwähnten Art gemäß einer zweiten Ausführungsform vorgeschlagen, dass es erfindungsgemäß aus einer Weißglasscheibe und einer dazu mit Abstand angeordneten, vorwiegend im nicht sichtbaren Bereich des solaren Strahlungsspektrums absorptiven Glasscheibenanordnung mit hoher Wärmespeicherkapazität, deren der Weißglasscheibe zugewandte Oberfläche mit einer die Emission langwelliger Wärmestrahlung mindernden Beschichtung (low-E-Beschichtung) versehen ist, besteht, wobei die absorptive Glasscheibenanordnung als wenigstens zweischichtiges Verbundglas mit einer PVB-Zwischenfolie zwischen den Glasschichten ausgebildet ist, in die Zwischenfolie molekulare Schichtungen oder Pigmentierungen als absorptives Medium für den langwelligeren, nicht sichtbaren Spektralbereich und/oder den UV-Anteil des Sonnenlichts eingebracht sind, die Glasschichten aus Weißglas oder Floatglas bestehen und die Zwischenfolie allein als absorptives Medium dient und die absorptive Glasscheibenanordnung mit hoher Wärmespeicherkapazität mindestens etwa die doppelte Dicke der Weißglasscheibe aufweist.

Gemäß einer Ausgestaltung besteht die absorptive Glasscheibenanordnung aus zwei beabstandeten Glasscheiben und einem dazwischen abgedichtet angeordneten, für sichtbares Licht durchlässigem Fluid mit hoher Wärmespeicherkapazität.

Die Erfindung geht von der Überlegung aus, dass es darauf ankommt, Lösungen für eine Maximierung des thermischen Nutzens des eingestrahlten, solaren Energiepotentials zur Entlastung der Heizungsbilanz in den Winter- und Übergangsmonaten aufzufinden, wobei die durch das Isolierglaselement einfallende und durch die absorptive Glasscheibenanordnung in langwellige Wärmestrahlung transmittierte Sonnenenergie im Scheibenelement verdichtet und zeitlich verlängert einbehalten oder eingespeichert werden soll, um nicht nur kurzfristige, sondern auch länger anhaltende, solare Einstrahlungsdefizite auszugleichen. Durch die hohe Wärmespeicherkapazität der absorptiven Glasscheibenanordnung lässt sich das Temperaturniveau der dem Raum zugewandten Glasscheibe längerfristig konstant aufrechterhalten, wodurch ein über der Rauminnenluft liegendes Temperaturniveau der dem Raum zugewandten Glasscheibe erreicht wird, das nicht nur die thermische Behaglichkeit des Raumes erhöht, sondern durch ein Absenken des Wärmedurchgangskoeffizienten des Isolierglaselements in erheblichem Maße die Wärmebilanz des Innenraums verbessert.

Die auftretende Sonnenstrahlung durchdringt die Weißglasscheibe annähernd verlustlos und fällt auf die dem Innenraum zugewandte absorptive Glasscheibenanordnung. Sowohl die durchtretenden sichtbaren Teile als auch die von der absorptiven Glasscheibenanordnung absorbierten und in Wärmeenergie verwandelten Anteile des solaren Strahlungsspektrums kommen dem Innenraum zugute, da die nach außen gewandte emissionsmindernde Beschichtung der absorptiven Glasscheibenanordnung die Wärmeabstrahlung nach außen hin verhindert.

Zusätzlich kann die nach außen gewandte Oberfläche der absorptiven Glasscheibenanordnung ebenfalls mit einer die Emission langwellige Wärmestrahlung mindernden Beschichtung versehen sein. Diese Anordnung ist geeignet, das Speichervermögen der absorptiven Glasscheibenanordnung zu erhöhen. Durch die die Emission langwelliger Wärmestrahlung mindernde Beschichtung wird die Wärmeabstrahlung zum Innenraum hin gleichfalls gemindert, und die in der Scheibe eingespeicherte Wärme wird auf ein höheres Temperaturniveau angehoben und auf diesem Niveau zeitlich verlängert aufrechterhalten.

Durch diese Beschichtung wird zusätzlich auch das Emissionsvermögen der raumseitigen Scheibenoberfläche wesentlich vermindert, wodurch allgemein der Wärmedurchgangskoeffizient des Isolierglaselements auf einen Wert von k = 0,8 W/m²K abgesenkt werden kann. Dies ist sowohl vorteilhaft in der Winterposition als auch in der Sommerposition, wenn das erfindungsgemäße Isolierglaselement in einem Fenster entsprechend der DE 41 25 834 C2 verwendet wird.

Die Beschichtung läßt sich mittels Kathoden-Sputterung aufbringen. In diesem Fall ist die Beschichtung zum gasgefüllten Zwischenraum hin anzuordnen, da diese Beschichtung außen keine ausreichende Langzeitstabilität aufweist. Soll eine außenseitige Beschichtung vorgenommen werden, ist diese als pyrolytische Glasbeschichtung durchzuführen.

Der thermische Nutzen des eingestrahlten, solaren Energiepotentials läßt sich zusätzlich erhöhen, wenn wenigstens eine Oberfläche der Weißglasscheibe mit einer Antireflexbeschichtung versehen wird. Die Antireflexbeschichtung läßt sich als Interferenzbeschichtung mittels einer Magnetron-Anlage auf die der absorptiven Glasscheibenanordnung zugewandte Oberfläche aufsputtern oder beidseitig im Tauchverfahren aufbringen, wobei die im Tauchverfahren aufgebrachte Beschichtung anschließend eingebrannt wird. Da die Reflexionen an der Glasscheibe auf jeder Seite je etwa 4 % der auftreffenden Sonnenstrahlung ausmachen, läßt sich mit einer einseitigen Beschichtung ein solarer Strahlungsgewinn von etwa 4 %, mit einer beidseitigen Antireflexbeschichtung ein solarer Strahlungsgewinn von etwa 8 % erreichen.

Während der durch das eisenoxidfreie Weißglas bedingte Gewinn von 7 bis 8 % vornehmlich im langwelligen, also im nicht sichtbaren Teil des solaren Spektrums anfällt, liegt der Gewinn, der durch die Reflexionsminderung erreicht wird, vornehmlich im sichtbaren Solarspektrum. Insgesamt läßt sich durch eine beidseitige Beschichtung und die Verwendung von eisenoxidfreiem Weißglas ein Zugewinn der solaren Einstrahlquote, die ungehindert auf das Absorptionselement auftrifft, von ca. 15 % erreichen. Der Gewinn, der sich durch die Reflexionsminderung erreichen läßt, kann einerseits als Zugewinn an Lichtstrahlung für die Raumhelligkeit benutzt werden, läßt sich andererseits jedoch durch Spreizung der Absorptionsbanden der absorptiven Glasscheibenanordnung auch unmittelbar in Wärmestrahlung umwandeln.

Die erfindungsgemäße Optimierung des thermischen Nutzens des solaren Energieeintrages läßt sich in einfacher und überaus vorteilhafter Weise bereits durch Erhöhen der Dicke der absorptiven Glasscheibenanordnung erreichen, die vorzugsweise mindestens etwa die doppelte Dicke der Weißglasscheibe beträgt. Wenn die Weißglasscheibe eine Dicke von 3 bis 5 mm aufweist, kann die absorptive Glasscheibenanordnung vorteilhafterweise eine Dicke von 6 bis 12 mm aufweisen. Durch den entsprechenden Zuwachs des Volumens der absorptiven Glasscheibenanordnung bei gleichbleibender Größe der Abstrahlungsfläche der Glasscheibe wird eine erhebliche Wärmeaufladung der absorptiven Glasscheibenanordnung erreicht, so daß sich die Schwankungen der Sonneneinstrahlung bei partiell bewölktem Himmel bzw. temporäre Temperaturdefizite auf der dem Raum zugewandten Scheibenoberfläche ausgleichen lassen.

Mit der erfindungsgemäßen Ausbildung der absorptiven Scheibenanordnung mit hoher Wärmespeicherkapazität wird die in den Raum einfallende und in Wärme umgewandelte solare Strahlungsenergie in der absorptiven Glasscheibenanordnung einbehalten und hier aufgrund der vergrößerten Masse über einen verlängerten Zeitraum verdichtet gespeichert, anstatt unmittelbar auf die ausgedehnten Wandflächen des Innenraums aufzutreffen, die für die absorptive Aufnahme langwelliger Wärmestrahlung in der Regel nicht optimal ausgestattet sind.

Auf diese Weise wird trotz temporärer Schwankungen in der Einstrahlungsintensität ein erhöhtes Temperaturniveau der dem Raum zugewandten Scheibenoberfläche erhalten, das bereits bei geringer diffuser Tageslichteinstrahlung, selbst bei nördlicher Ausrichtung des Fensters, Temperaturwerte ausweist, die über denen der Raumtemperatur liegen.

Das durch die Erhöhung der Scheibenmasse der absorptiven Glasscheibenanordnung verwirklichte thermische Speicher- und Pufferkonzept wirkt sich somit in vorteilhafter Weise bei der Einstellung eines zuträglichen und behaglichen Raumklimas aus. Das erfindungsgemäße Speicher- und Pufferkonzept begünstigt bei Tageslicht aber auch durch die stete Aufrechterhaltung eines Temperaturniveaus der zum Raum zugewandten Oberflächen der absorptiven Glasscheibenanordnung über der Rauminnentemperatur einen Effekt, der sich direkt mindernd auf die Transmissionswärmeverluste, d. h. auf den effektiven k-Wert des Isolierglaselements auswirkt. Erreicht nämlich die Oberflächentemperatur der dem Raum zugewandten absorptiven Glasscheibenanordnung die Innentemperatur des Raumes, so sinkt der effektive k-Wert auf einen Wert von k = 0. Hierdurch entsteht eine thermische Barriere, weil der nach außen gerichtete Wärmefluß, gekennzeichnet durch den k-Wert des Isolierglaselements, nämlich k = 1,1 W/m²K, durch die von der absorptiven Glasscheibenanordnung gespeicherten solaren Einstrahlung kompensiert wird.

Übersteigt die Temperatur der absorptiven Glasscheibenanordnung die Luftinnentemperatur des Raumes, so kommt die von der Scheibe absorbierte und gespeicherte solare Strahlungsenergie als Wärmestrahlung der Erwärmung des Rauminneren unmittelbar zugute.

Bei ungetrübter Sonneneinstrahlung werden auch im Winter Oberflächentemperaturen der absorptiven Glasscheibenanordnung bis zu 45° C erreicht, d. h. Temperaturen der Wärmeemission, die einem mild strahlenden Kachelofen entsprechen.

Das erfindungsgemäße Speicher- und Pufferkonzept führt zu einem bisher nicht erreichten Ertragsnutzen der eingestrahlten Sonnenenergie. Entsprechend dem g-Wert des Isolierglaselements setzt sich der für die Raumerwärmung gewonnene Ertrag aus der solar erzeugten Wärmeeinstrahlung oder konvektiven Wärmeabgabe der absorptiven Glasscheibenanordnung an den Innenraum und der durch die Isolierglasscheibe hindurchtretenden, unmittelbaren Direkteinstrahlung des sichtbaren Bereichs des solaren Spektrums zusammen. Die kurzwellige Strahlung des sichtbaren Bereichs trägt bei vorwiegend absorptiven Wandflächen des Innenraums zu deren Erwärmung bei. Nur ein geringfügiger Anteil dieser kurzwelligen Strahlung kann den Raum über die Scheibenfläche wieder verlassen. Für langwellige Wärmestrahlung ist das erfindungsgemäße Isolierglaselement undurchlässig.

Der durch das erfinderische Speicher- und Pufferkonzept des Isolierglaselements insgesamt zu erreichende solare Ertragsnutzen, wie vorstehend erläutert und dargestellt, wird in seinem vollen Ausmaß deutlich, wenn man diesen Nutzen den Leistungen gebräuchlicher Isolierglaselemente gegenüberstellt.

Zunächst ist der Bruttobetrag der solaren Einstrahlung durch Verwendung einer Weißglasscheibe um 7 - 8 % höher. Geht man von einem dreischeibigen Isolierglaselement aus, so muß man die Reflexions- und Absorptionsverluste der Mittelscheibe und deren zusätzliche Beschichtung in Kauf nehmen, bevor die Strahlung auf die Innenscheibe trifft. Dies kennzeichnet bereits der deutlich verringerte g-Wert eines herkömmlichen Isolierglaselements.

Demgegenüber erreicht das in dieser Hinsicht leistungsfähigste, bekannte Isolierscheibenelement bei einem dreischeibigen Aufbau mit einer Kryptonfüllung der Zwischenräume und zwei bzw. drei low-E-Beschichtungen nur einen k-Wert von k = 0,4. Der g-Wert dieses Scheibenelements liegt dann bei Werten unter g = 0,5.

Die erheblichen Nutzungsverluste der solaren Einstrahlung sind hauptsächlich durch die beschränkte Absorptionsfähigkeit der dem Raum zugewandten Floatglasscheibe bedingt. Da diese Scheibe nur 2 bis 4 % der auftreffenden Solarstrahlung zu absorbieren vermag, kann auch nur ein Bruchteil des einfallenden Sonnenspektrums in langwellige Wärmestrahlung transmittiert werden. Ein hoher Anteil der solaren Einstrahlung, wenn sie nicht von den Flächen des Innenraums absorbiert wird, kann daher dann nach Mehrfach-Reflexionen wieder durch die Glasflächen der Fenster ungenutzt austreten.

Dies ist unmittelbar nachvollziehbar, denn für außenstehende Betrachter sind die Raumgegenstände von außen durch die gläsernen Fensterflächen einsehbar.

Wenn helle, reflektive Gardinen oder Vorhänge vorhanden sind, kann auf diese Weise bis zu 50 % der in den Raum einstrahlenden Solarstrahlung durch die gläsernen Hüllflächen ohne thermischen Nutzen wieder nach außen abgestrahlt werden.

Infolge der vergrößerten Masse und damit der Wärmespeicherkapazität der absorptiven Glasscheibenanordnung in Verbindung mit einer Weißglasscheibe ergibt sich ein zweischeibiges Isolierglaselement mit einem Wärmedurchgangskoeffizienten von annähernd k = 1,1 W/m²K, so daß auch bei durch sehr geringe oder diffuse Einstrahlung bzw. durch zeitweise bedeckte Bewölkung gegebenen Einstrahlungsdefiziten insgesamt bei Tageslicht eine im wesentlichen konstante Oberflächentemperatur der absorptiven Glasscheibenanordnung erreicht wird, die mindestens gleich der Lufttemperatur des Innenraums ist oder darüber liegt, wodurch das erfindungsgemäße Isolierglaselement fast konstant einen effektiven k-Wert von k = 0 aufweist.

Um möglichst günstige Werte hinsichtlich der Durchlässigkeit für sichtbares Licht und der Absorption im nicht sichtbaren Bereich des solaren Strahlungsspektrums zu erreichen, weist die Weißglasscheibe vorteilhafterweise einen äußerst geringen Eisenoxidanteil auf und ist die absorptive Glasscheibenanordnung wenigstens teilweise als sogenannte Grünglasscheibe ausgebildet. Insbesondere kann die absorptive Glasscheibenanordnung als massive Grünglasscheibe ausgebildet sein, also als Glasscheibe mit einem hohen Eisenoxidanteil.

Gemäß einer anderen vorteilhaften Ausführungsform kann die absorptive Glasscheibenanordnung als wenigstens zweischichtiges Verbundglas mit einer PVB-Zwischenfolie zwischen den Glasschichten ausgebildet sein.

Die Verwendung einer als Verbundglas ausgebildeten, absorptiven Glasscheibenanordnung ist vorteilhaft, da hierdurch ein zusätzlicher Schallschutzeffekt erreicht wird. Dieser Schallschutzeffekt läßt sich noch durch die Verwendung einer Zwischenfolie mit einer größeren Dicke als üblich, von beispielsweise 1 bis 2 mm und/oder durch spezifische Folienzusammensetzungen verbessern. Durch die Verwendung von Verbundglas wird des weiteren die Einbruchssicherheit der Verglasung mittels des erfindungsgemäßen Isolierglaselements erhöht.

Zusätzlich ist es möglich, den Absorptionsgrad und die verbleibende Lichtdurchlässigkeit sowie die Speicherfähigkeit der als Verbundglas ausgebildeten, absorptiven Glasscheibenanordnung zu erweitern, indem in die transparente Zwischenfolie molekulare Schichtungen oder Pigmentierungen eingebracht werden, die zu einer schärferen Trennung zwischen dem kurzwelligen, sichtbaren und dem langwelligeren, nicht sichtbaren Bereich des Sonnenspektrums führen. Auch läßt sich hierdurch eine Absorption des UV-Anteils der solaren Strahlung mit dem Vorteil eines wirksamen UV-Strahlungsschutzes für Stoffmaterialien im Rauminneren und eines zusätzlichen Wärmeertrags in dem Absorptionselement von annähernd 5 % erreichen. Darüber hinaus besteht auch die Möglichkeit, die absorptive Funktion der Glasscheibenanordnung allein oder zum großen Teil der Zwischenfolie zuzuordnen.

Aus Gründen der Bruchsicherheit ist es vorteilhaft, wenigstens eine Glasscheibe des Isolierglaselements, vorzugsweise die absorptive Glasscheibenanordnung, mit wenigstens einer Glasscheibe oder Glasschicht aus vorgespanntem oder teilvorgespanntem Glas zu versehen, das gegen Temperaturunterschiede weitgehend unempfindlich ist.

Um eine möglichst hohe Wärmespeicherkapazität der absorptiven Glasscheibenanordnung zu erreichen, kann diese aus zwei beabstandeten Glasscheiben und einem dazwischen abgedichtet angeordneten, für sichtbares Licht durchlässiges Fluid mit hoher Wärmespeicherkapazität bestehen, wobei das Fluid beispielsweise aus Wasser, insbesondere aus kolloidvernetztem Wasser, bestehen kann, das eine etwa fünffach höhere spezifische Wärme gegenüber Glas aufweist. Die Wärmespeicherkapazität der Flüssigkeit läßt sich durch einen hohen Anteil gelöster Metallsalze noch weiter erhöhen, wobei sich diese Metallsalze so auswählen lassen, daß sie auch zu einer Absorption des nicht sichtbaren Bereichs des solaren Strahlungsspektrums beitragen. Die Flüssigkeit kann auch aus einem dispersionshomogenen Hydrogel hoher Viskosität bestehen.

Einen Beitrag zum erfindungsgemäßen, thermischen Speichern und Puffern der in Wärme umgewandelten, solaren Strahlungsenergie leistet generell eine Füllung des Zwischenraums zwischen der Weißglasscheibe und der absorptiven Glasscheibenanordnung mit einem Edelgas, vorzugsweise Krypton, die auch die Wärmeabstrahlung nach außen vermindert, wobei die Breite des Zwischenraums dann vorteilhafterweise etwa 10 mm betragen kann. Bei Verwendung einer 5 mm dicken Weißglasscheibe, einer 12 mm dicken, absorptiven Glasscheibenanordnung und einer Spaltbreite von 10 mm ergibt sich beispielsweise eine durchaus übliche Dicke des Isolierglaselements von 27 mm. Isolierglaselemente dieser Dicke und Konzeption lassen sich noch ohne weiteres in Fenstern der in der DE 41 25 834 C2 beschriebenen Art verwenden.

Im Falle der Kryptonfüllung und eines low-E-Koeffizienten von 0,03 erreicht das Isolierglaselement bereits einen k-Wert von k = 1 W/m²K.

Das erfindungsgemäße Speicherkonzept läßt sich in vorteilhafter Weise durch Kombination mit einer elektrischen Widerstandsheizung der absorptiven Glasscheibenanordnung ergänzen.

Fast alle low-E-Beschichtungen, sowohl die durch Kathoden-Sputterung aufgebrachten als auch die pyrolytisch aufgebrachten Beschichtungen, sind elektrisch leitend. Sie lassen sich als Flächenwiderstands-Schichten elektrisch erwärmen und insofern als Flächen-Strahlungsheizsysteme nutzen.

Ebenso ist es möglich, wie bei der Beheizung von Kraftfahrzeug-Rückwandverglasungen bereits bekannt, auf die absorptiven Isolierglasscheiben Leitersysteme im Siebdruckverfahren aufzudrucken. Alternativ kann auch, wie bei heizbaren Verbundwindschutzscheiben vorgesehen, ein kaum sichtbares Leitungsnetz aus Feindrähten in die Zwischenfolie des absorptiven Verbundglasaufbaus integriert werden.

Dieses Leitungsnetz läßt sich auch auf einer zusätzlichen, dem Raum zugekehrten, von der absorptiven Glasscheibenanordnung einen Mindestabstand von 15 mm aufweisenden Glasscheibe anbringen.

Die eigentliche erfinderische Konzeption liegt in der Idee der kompensatorischen Koppelung der elektrischen Beheizung der absorptiven Glasscheibenanordnung mit der eingestrahlten und gespeicherten Sonnenenergie. Das geschieht in der Weise, daß ein in die absorptive Glasscheibenanordnung integrierter Temperaturfühler die elektrische Heizung immer dann einschaltet, wenn die Temperatur der solarerwärmten Innenscheibe ein vorgebbares Temperaturniveau, insbesondere das Temperaturniveau der inneren Raumluft, nicht erreicht bzw. zeitweise auf einen Wert unterhalb dieses Niveaus absinkt.

Auf diese Weise wird die raumzugewandte Oberflächentemperatur der absorptiven Glasscheibenanordnung konstant über der Zeit mit der jeweiligen Innentemperatur des Raumes abgeglichen mit der Folge, daß ein konstanter effektiver k-Wert von k = 0 über die ganze Heizperiode konstant aufrechterhalten wird.

Gleichfalls bleiben dadurch die raumklimatischen Vorteile bereits mit einem minimalen Energieaufwand konstant auch über die Heizperiode gewahrt, da die elektrische Scheibenheizung stets nur die Differenz zwischen der solarerwärmten Innenscheibe und der Rauminnentemperatur kompensiert, die zudem dann vorteilhafterweise ohne Komforteinbuße auf 18 bis 20° C absenkbar ist.

Durch eine flexible, bedarfsbezogene Temperaturregelung der Fensterscheiben-Heizung kann man, insbesondere bei größerem Fensterflächenanteil der Raumhüllflächen, auf übliche Heizungssysteme verzichten, die vergleichsweise weit höhere Betriebs- und Wartungskosten verursachen, ungeachtet der erforderlichen Anlagekosten.

Unter der Voraussetzung eines guten Dämmstandards der sonstigen Raum- und Gebäudehüllflächen ergibt die die Solarstrahlung absorbierende und speichernde, hochgedämmte Isolierglasscheibenanordnung in kompensatorischer Koppelung mit dem elektrisch versorgten und in die absorptive Glasscheibenanordnung integrierten, flächigen Heizungssystem in der dargestellten Art ein hervorragendes und überaus kostengünstiges Konzept für die winterliche Beheizung, und in Verbindung mit dem Diodeneffekt eines drehbaren Fenstersystems auch die sommerliche Klimatisierung eines Niedrigenergiegebäudes.

Wird die Temperatur der absorptiven Glasscheibenanordnung durch elektrische Heizung auf einer Temperatur gehalten, die höher als die Raumtemperatur ist, läßt sich das Isolierglaselement in vorteilhafter Weise als Strahlungsheizkörper für die Raumtemperierung verwenden.

Mittels einer differenzierten Steuerelektronik, die die Scheibentemperatur und die einzugebende Raumtemperatur berücksichtigt, läßt sich eine an zeitliche Bedürfnisse, wie Aufheizdauer und Nachtabsenkung, angepaßte Regelung erreichen.

Die Vorteile dieses Konzepts liegen zunächst in seiner Wirtschaftlichkeit, wobei die Ersparnisse an Energie-, Betriebs- und Wartungskosten, insbesondere aber die Ersparnisse an investivem Kostenaufwand zählen.

Von Bedeutung ist aber auch, in Anbetracht eines zuträglichen Strahlungsklimas der Innenräume, der Gewinn an Wohnbehaglichkeit und an Wohnhygiene.

Letztlich verdient der ökologische Aspekt dieses Konzepts Beachtung, da es hier gelingt, die Sonneneinstrahlung auch in mitteleuropäischen Breiten für die Gebäudeklimatisierung in optimaler Weise zu nutzen.

Die Erfindung wird nachstehend anhand mehrerer in der Zeichnung dargestellter Ausführungsbeispiele beschrieben. In der Zeichnung zeigen:
- Fig. 1: einen Querschnitt durch ein Fenster mit einem erfindungsgemäßen Isolierglaselement gemäß einer ersten Ausführungsform,
- Fig. 2: eine teilweise Schnittansicht eines erfindungsgemäßen Isolierglaselements gemäß einer zweiten Ausführungsform,
- Fig. 3: eine teilweise Schnittansicht eines erfindungsgemäßen Isolierglaselements gemäß einer dritten Ausführungsform und
- Fig. 4: eine teilweise Schnittansicht eines erfindungsgemäßen Isolierglaselements gemäß einer vierten Ausführungsform.

Ein Fenster mit einem erfindungsgemäßen Isolierglaselement ist nur schematisch im Querschnitt dargestellt und weist einen gebäudefesten Blendrahmen 1 üblicher Art auf. In einem entsprechenden Ausschnitt des Blendrahmens 1 ist ein Flügelrahmen 2 eingepaßt und am Blendrahmen 1 über ein Schwenkgelenk 5 in Form eines üblichen Bandes schwenkbar gelagert. Dieser Flügelrahmen 2 liegt am Blendrahmen 1 mit doppeltem Anschlag an.

Ein Isolierglaselement aus einer Weißglasscheibe 11 und einer mit Abstand dazu angeordneten, vorwiegend im nicht sichtbaren Bereich des solaren Strahlungsspektrums absorptiven Grünglasscheibe 4 ist von einem Isolierglaselementrahmen 3 umfaßt. Mittels eines im einzelnen nicht dargestellten, in der senkrechten Mittelachse des Isolierglaselements 4, 11 angeordneten Wendegelenks 6 läßt sich das Isolierglaselement 4, 11 mit dem Isolierglaselementrahmen 3 im Flügelrahmen 2 nach Lösen einer nicht dargestellten Verriegelung um 180° wenden und wieder verriegeln.

Im Bereich einer Seitenfläche des Isolierglaselementrahmens 3 ist an einem umlaufenden Vorsprung des Blendrahmens 1 eine umlaufende Dichtung 7 angeordnet, an die sich der Isolierglaselementrahmen 3, wenn das Fenster geschlossen ist, anlegt und dadurch die Abdichtung gewährleistet. Es ist erkennbar, daß durch diese eine Dichtung 7 eine vollständige Abdichtung des Fensterflügels gewährleistet ist, ohne daß eine zusätzliche Dichtung zwischen dem Isolierglaselementrahmen 3 und dem Flügelrahmen 2 erforderlich ist. Dennoch kann es bei bestimmten Anwendungsfällen zweckmäßig sein, weitere Dichtungen 8, 26 zwischen dem Isolierglaselementrahmen 3 und dem Fensterflügelrahmen 2 und/oder zwischen dem Blendrahmen 1 und dem Fensterflügelrahmen 2 anzuordnen, ohne daß dies jedoch in den meisten Anwendungsfällen notwendig ist.

Die zur durch die Wendegelenke 6 verlaufenden Wendeachse parallelen Außenflächen 9 des Isolierglaselementrahmens 3 sind mit einem Radius abgerundet, der dem Abstand zur Wendeachse entspricht. Die entsprechenden Innenflächen 10 des Flügelrahmens 2 sind ebenfalls abgerundet, so daß sich der Isolierglaselementrahmen 3 mit geringem Spiel in den Flügelrahmen 2 einpassen läßt. Der Isolierglaselementrahmen 3 verläuft innenbündig mit dem Blendrahmen 1, so daß sich mit einer einzelnen Leiste 27 (Beplankung) aus Metall- oder Kunststoffprofilen sowohl der Blendrahmen 1 als auch der Flügelrahmen 2 abdecken lassen. Auf diese Weise lassen sich wiederholte Anstriche einsparen. Bei einem üblichen Wendeflügelfenster müßte man zu diesem Zweck getrennt den Blendrahmen und zusätzlich den Wendeflügel beplanken, letzteren beidseitig.

Die Grünglasscheibe 4 weist mindestens etwa die doppelte Dicke der Weißglasscheibe 11 auf und besteht aus vorgespanntem oder teilvorgespanntem Glas. Vorzugsweise beträgt die Dicke der Weißglasscheibe 11 zwischen 3 und 5 mm, während die Grünglasscheibe eine Dicke zwischen 6 und 12 mm aufweist. Der Abstand der Weißglasscheibe 11 von der Grünglasscheibe 4 beträgt vorzugsweise etwa 8 bis 12 mm, und der so gebildete, mittels üblicher Abstandshalter abgedichtete Zwischenraum 12 ist mit einem Edelgas, vorzugsweise Krypton gefüllt.

Auf der dem Zwischenraum 12 zugewandten Oberfläche der Grünglasscheibe 4 ist eine die Emission langwelliger Wärmestrahlung mindernde Beschichtung 13 (low-E-Beschichtung) angeordnet.

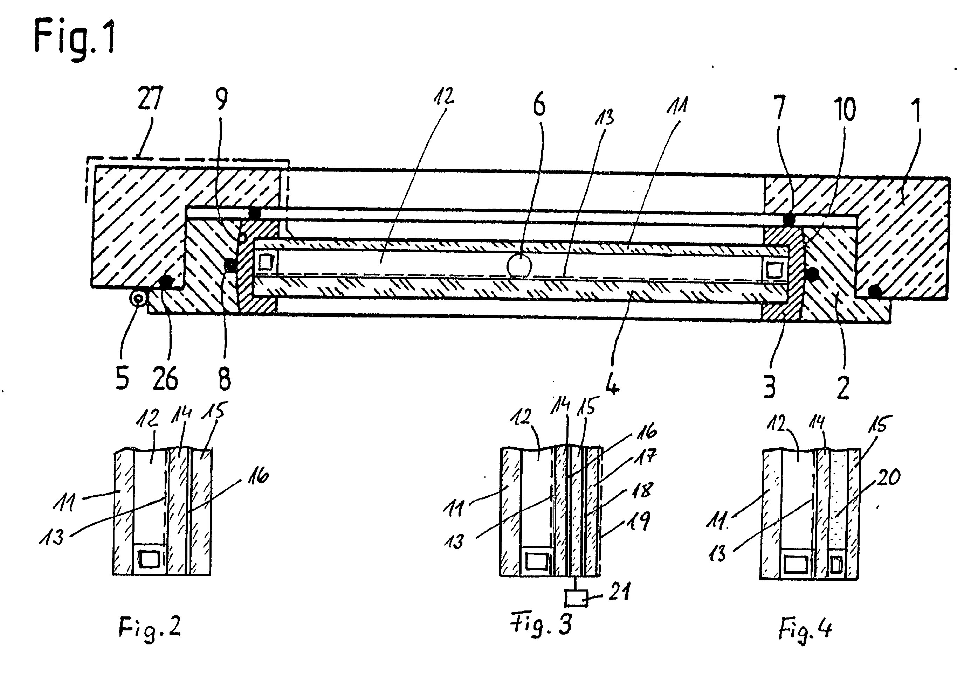

Die in Fig. 1 dargestellte Stellung des Isolierglaselements 4, 11 ist die Winterstellung, in der die in der Grünglasscheibe 4, die aufgrund ihrer Dicke eine hohe Wärmespeicherkapazität aufweist, gespeicherte Wärme zum Gebäudeinnenraum hin abgestrahlt wird. Dadurch wird die Innenraumtemperatur und/oder die Behaglichkeit erhöht. Die Beschichtung 13 bewirkt, daß die in der Grünglasscheibe 4 gespeicherte Wärme im wesentlichen zum Gebäudeinnenraum hin abgestrahlt wird.

In der um 180° gedrehten Sommerstellung wird die in der Grünglasscheibe 4 gespeicherte Wärme im wesentlichen nach außen abgestrahlt oder konvektiv abgeführt, so daß die Wärmeabgabe zum Innenraum hin erheblich vermindert wird.

Will man Isolierglaselemente mit möglichst hoher Wärmespeicherkapazität verwenden, erreicht man Glasdicken für die absorptive Glasscheibenanordnung, die sich als Massivglasscheibe nicht mehr kostengünstig herstellen lassen. Daher besteht die Ausführungsform gemäß Fig. 2 aus einem zweischichtigen Verbundglas mit einer PVB-Zwischenfolie 16 zwischen den Glasschichten 14, 15. Sowohl die Weißglasscheibe 11 als auch die Glasschichten 14, 15 können dieselbe Dicke von beispielsweise 5 mm aufweisen, so daß bei einem Abstand zwischen den Scheiben 11, 14 von 10 mm und einer Dicke der PVB-Zwischenfolie von 1 mm eine Gesamtdicke des Isolierglaselements von 25 mm erreicht wird. Die Anordnung der die die Emission langwelliger Wärmestrahlung mindernden Beschichtung 13 ist die gleiche wie bei der Ausführungsform gemäß Fig. 1.

Durch die verhältnismäßig dicke PVB-Zwischenfolie 16, die das übliche Maß von etwa 0,75 mm überschreitet, wird zusätzlich eine Verbesserung der Schallschutzfunktion dieses Isolierglaselements erreicht, die sich bei einer Erwärmung der Folie durch das aufgeheizte Glas noch wesentlich erhöht.

Die Ausführungsform gemäß Fig. 3 weist ein dreischichtiges Verbundglas aus den Glasscheiben 14, 15, 17 und den PVB-Zwischenfolien 16, 18 auf Die Gesamtdicke dieser Anordnung ist die gleiche wie bei der Ausführungsform gemäß Fig. 2. In die Zwischenfolien 16, 18 können molekulare Schichten oder Pigmentierungen als absorptives Medium für den langwelligeren, nicht sichtbaren Spektralbereich und/oder den UV-Anteil des Sonnenlichts eingebracht sein. Bei dieser Ausführungsform ist eine zusätzliche, die Emission langwelliger Wärmestrahlung mindernde Beschichtung 19 auf der nach außen gerichteten Oberfläche der absorptiven Glasscheibenanordnung 14, 15, 16, 17, 18 angeordnet. Durch die Beschichtungen 13, 19 wird die Abstrahlung der gespeicherten Wärme in beide Richtungen behindert, wodurch vorteilhafterweise eine Erhöhung der Temperatur der absorptiven Glasscheibenanordnung und eine zeitlich verlängerte Speicherung der Wärme, insbesondere aber eine beträchtliche Verringerung des k-Wertes dieser Glasscheibenanordnung bewirkt wird.

Bei der Ausführungsform gemäß Fig. 4 besteht die absorptive Glasscheibenanordnung aus zwei beabstandeten Glasscheiben 14, 15 und einem beispielsweise mit einem für sichtbares Licht durchlässigen Fluid 20 mit hoher Wärmespeicherkapazität gefüllten Zwischenraum. Wird für dieses Fluid 20 Wasser oder kolloidvernetztes Wasser genommen, läßt sich die Wärmespeicherkapazität bei gleichen Abmessungen fast verdreifachen, da die spezifische Wärme von Wasser mehr als das Fünffache der von Glas beträgt. Werden im Wasser bestimmte Metallsalze gelöst, läßt sich die Wärmekapazität noch weiter erhöhen und die Absorption in der Flüssigkeit auf bestimmte Wellenlängenbereiche des Strahlungsspektrums abstimmen.

Das Fluid 20 kann auch aus einem dispersionshomogenen Hydrogel hoher Viskosität bestehen, um bei hohen Isolierglaselementen die Auswirkungen des hydrostatischen Drucks zu vermindern.

Selbst wenn die absorptiven Glasscheibenanordnungen gemäß Fig. 1 bis 4 überhaupt keine die Emission langwelliger Wärmestrahlung mindernde Beschichtung aufweisen, ist der erfindungsgemäße, vorteilhafte Aspekt der Wärmespeicherung in der absorptiven Glasscheibenanordnung gegeben, da das erhöhte Wärmespeicherungsvermögen erhalten bleibt. In diesem Fall wirkt das erfindungsgemäße Isolierglaselement zwar nicht als Solardiode, die sich durch Schwenken um 180° in eine Sommerstellung und in eine Winterstellung bringen läßt, jedoch ist in diesem Fall eine vereinfachte Fensterausbildung ohne Schwenkmöglichkeit gegeben, die gegenüber normalen Fenstern mit Isolierglasscheiben ohne Wärmespeicherung eine verbesserte Behaglichkeit auch bei kurzzeitigen Schwankungen der Sonneneinstrahlung gewährleistet.

Die elektrisch leitenden Beschichtungen 13, 19 lassen sich als elektrische Widerstandsflächenheizung für das erfindungsgemäße Isolierglaselement nutzen. Alternativ können elektrische Widerstandsleiter im Siebdruckverfahren auf die absorptive Glasscheibenanordnung 4; 14, 15, 16; 14, 15, 16, 17, 18 aufgebracht sein oder können elektrische Widerstandsheizdrähte (nicht dargestellt) in die Zwischenfolie(n) 16, 18, der als Verbundglas ausgebildeten absorptiven Glasscheibenanordnung 14, 15, 16; 14, 15, 16, 17, 18 eingelagert sein. Die Widerstandsflächenheizung läßt sich auch an einer zusätzlichen, dem Raum zugekehrten, von der absorptiven Glasscheibenanordnung 14, 15, 16; 14, 15, 16, 17, 18 einen Mindestabstand von 15 mm aufweisenden Glasscheibe anordnen.

Ein Temperaturfühler 21 an der absorptiven Glasscheibenanordnung 14, 15, 16, 17, 18 schaltet das Heizsystem 13, 19 ein, wenn die Temperatur der absorptiven Glasscheibenanordnung auf eine vorgebbare Temperatur, insbesondere auf die oder unter die Innenraumtemperatur absinkt oder sie nicht erreicht.

Wird die Temperatur der absorptiven Glasscheibenanordnung durch die elektrische Heizung auf einer Temperatur oberhalb der Raumtemperatur gehalten, läßt sich das erfindungsgemäße Isolierglaselement als Strahlungsheizkörper für die Raumtemperierung nutzen.

Die Temperaturregelung mittels einer differenzierten, nicht dargestellten Steuerelektronik läßt sich zweistufig auslegen. Es kann eine Grundstufe vorgesehen sein, die sich nur an der jeweils bestehenden Wärmedurchgangsverlustquote ausgleichend orientiert, um den k-Wert gleich Null zeitlich konstant aufrecht zu erhalten.

In der zweiten Stufe läßt sich ein höheres Temperaturniveau für die Raumheizung unter gleichzeitiger Berücksichtigung der entsprechend steigenden Durchgangsverluste einstellen. Dabei sind beide Stufen an den jeweiligen, in den Raum eintretenden, globalen Solarenergieanteil gekoppelt, der sich aus der direkten Einstrahlung, der diffusen Einstrahlung sowie der reflektiven Einstrahlung ergibt. Auch die inneren Wärmequellen des Raumes werden dabei berücksichtigt.

Ein derartiges, elektrisch beheizbares Isolierglaselement eignet sich insbesondere als Brüstungsflächenelement einer geschoßhohen Verglasung. Das Brüstungsscheibenelement kann als Wendeelement mit Sommer- und Winterposition ausgebildet sein und kann eine absorptive Scheibenanordnung mit einem höheren Absorptionsgrad von etwa 70 % der einfallenden solaren Einstrahlung unter Einbeziehung sichtbarer Anteile aufweisen. Dieses Brüstungsscheibenelement ist dann erheblich weniger durchsichtig als die darüber liegenden Verglasungselemente, jedoch ist bei Brüstungsverglasungen als Teil geschoßhoher Verglasungselemente ein hoher Lichteinfall nicht erforderlich.

Die elektrische Widerstandsheizung kommt mit einem äußerst geringen Energieaufwand aus, selbst wenn das erfindungsgemäße Isolierglaselement als alleiniges Raumheizungselement verwendet wird. Voraussetzung hierfür ist die optimale Nutzung der solaren Einstrahlung durch den hochselektiv absorptiven Scheibenaufbau mit großer Wärmespeicherkapazität.

Insbesondere für Niedrigenergiehäuser mit einem hohen Dämmstandard läßt sich das erfindungsgemäße Isolierglaselement als alleiniges Raumheizungskonzept in vorteilhafter Weise nutzen.

Als reines Strahlungsheizsystem, jeweils flexibel bedarfsgesteuert, ergibt sich hieraus ein äußerst rationelles und kosteneffektives Heizungssystem mit dem Vorzug der Schaffung eines behaglichen und physiologisch zuträglichen Raumklimas.

## Patentansprüche

1. Isolierglaselement für die Gebäudeverglasung aus einer Weißglasscheibe (11) mit äußerst geringem Eisenoxidanteil und einer dazu mit Abstand angeordneten, vorwiegend im nicht sichtbaren Bereich des solaren Strahlungsspektrums absorptiven als Grünglasscheibe ausgebildeten Glasscheibenanordnung (4; 14, 15, 16; 14, 15, 16, 17, 18; 14, 15, 20) mit hoher Wärmespeicherkapazität, deren der Weißglasscheibe (11) zugewandte Oberfläche mit einer die Emission langwelliger Wärmestrahlung mindernden Beschichtung (13) versehen ist und mindestens etwa die doppelte Dicke der Weißglasscheibe (11) aufweist.

2. Isolierglaselement nach Anspruch 1, bei dem die Weißglasscheibe (11) eine Dicke von 3 bis 6 mm und die absorptive Glasscheibenanordnung (4; 14, 15, 16; 14, 15, 16, 17, 18; 14, 15, 20) eine Dicke von 6 bis 12 mm aufweisen.

3. Isolierglaselement nach Anspruch 1 oder 2, bei dem die absorptive Glasscheibenanordnung (4) als massive Grünglasscheibe ausgebildet ist.

4. Isolierglaselement nach Anspruch 1 oder 2, bei dem die absorptive Glasscheibenanordnung (14, 15, 16; 14, 15, 16, 17, 18) als wenigstens zweischichtiges Verbundglas mit einer PVB-Zwischenfolie zwischen den Glasschichten ausgebildet ist.

5. Isolierglaselement nach Anspruch 4, bei dem die Zwischenfolie (16; 16, 18) eine Dicke von 1 bis 2 mm aufweist.

6. Isolierglaselement nach Anspruch 1, bei dem die absorptive Glasscheibenanordnung aus zwei beabstandeten Glasscheiben (14, 15) und einem dazwischen abgedichtet angeordneten, für sichtbares Licht durchlässigen Fluid (20) mit hoher Wärmespeicherkapazität besteht.

7. Isolierglaselement nach Anspruch 6, bei dem das Fluid (20) aus Wasser besteht.

8. Isolierglaselement nach Anspruch 7, bei dem das Wasser (20) einen hohen Anteil gelöster Metallsalze aufweist.

9. Isolierglaselement nach Anspruch 6, 7 oder 8, bei dem das Fluid (20) aus einem dispersionshomogenen Hydrogel hoher Viskosität besteht.

10. Isolierglaselement nach einem der Ansprüche 6 bis 9, bei dem die Weißglasscheibe (11) eine Dicke von 3 bis 6 mm und die absorptive Glasscheibenanordnung (4; 14, 15, 16; 14, 15, 16, 17, 18; 14, 15, 20) eine Dicke von 6 bis 12 mm aufweisen.

11. Isolierglaselement für die Gebäudeverglasung aus einer Weißglasscheibe (11) und einer dazu mit Abstand angeordneten, vorwiegend im nicht sichtbaren Bereich des solaren Strahlungsspektrums absorptiven Glasscheibenanordnung (4; 14, 15, 16; 14, 15, 16, 17, 18; 14, 15, 20) mit hoher Speicherkapazität, deren der Weißglasscheibe (11) zugewandte Oberfläche mit einer die Emission langwelliger Wärmestrahlung mindernden Beschichtung (13) versehen ist, als wenigstens zweischichtiges Verbundglas mit einer PVB-Zwischenfolie zwischen den Glasschichten ausgebildet ist, in die Zwischenfolie (16; 16, 18) molekulare Schichtungen oder Pigmentierungen als absorptives Medium für den langwelligeren, nicht sichtbaren Spektralbereich und/oder den UV-Anteil des Sonnenlichts eingebracht sind, die Glasschichten (14, 15; 14, 15, 17) aus Weißglas oder Floatglas bestehen und die Zwischenfolie (16; 16, 18) allein als absorptives Medium dient und die absorptive Glasscheibenanordnung (4; 14, 15, 16; 14, 15, 16, 17, 18; 14, 15, 20) mit hoher Wärmespeicherkapazität mindestens etwa die doppelte Dicke der Weißglasscheibe (11) aufweist.

12. Isolierglaselement nach Anspruch 11, bei dem die Weißglasscheibe (11) eine Dicke von 3 bis 6 mm und die absorptive Glasscheibenanordnung (4; 14, 15, 16; 14, 15, 16, 17, 18; 14, 15, 20) eine Dicke von 6 bis 12 mm aufweisen.

13. Isolierglaselement nach Anspruch 11 oder 12, bei dem die Weißglasscheibe (11) einen äußerst geringen Eisenoxidanteil aufweist.

14. Isolierglaselement nach einem der Ansprüche 11 bis 13, bei dem die Zwischenfolie (16; 16, 18) eine Dicke von 1 bis 2 mm aufweist.

15. Isolierglaselement nach einem der Ansprüche 1 bis 14, bei dem die absorptive Glasscheibenanordnung (4; 14, 15, 16; 14, 15, 16, 17, 18; 14, 15, 20) wenigstens eine Glasscheibe oder Glasschicht aus vorgespanntem oder teilvorgespanntem Glas aufweist.

16. Isolierglaselement nach einem der Ansprüche 1 bis 15, bei dem der Abstand zwischen der Weißglasscheibe (11) und der absorptiven Glasscheibenanordnung (4; 14, 15, 16; 14, 15, 16, 17, 18; 14, 15, 20) etwa 8 bis 16 mm beträgt und mit einem Edelgas, vorzugsweise Krypton, gefüllt ist.

17. Isolierglaselement nach einem der Ansprüche 1 bis 16, bei dem zusätzlich die nach außen gewandte Oberfläche der absorptiven Glasscheibenanordnung (14, 15, 16, 17, 18) mit einer die Emission langwelliger Wärmestrahlung mindernden Beschichtung (19) (low-E-Beschichtung) versehen ist.

18. Isolierglaselement nach Anspruch 17, bei dem die dem gasgefüllten Zwischenraum (12) zugewandte Oberfläche mittels Kathoden-Sputterung und die nach außen gewandte Oberfläche pyrolytisch beschichtet ist.

19. Isolierglaselement nach einem der Ansprüche 1 bis 18, bei dem wenigstens eine Oberfläche der Weißglasscheibe (11) mit einer Antireflexbeschichtung versehen ist.

20. Isolierglaselement nach Anspruch 19, bei dem die Antireflexbeschichtung als Interferenzbeschichtung auf die der absorptiven Glasscheibenanordnung (4; 14, 15, 16; 14, 15, 16, 17, 18; 14, 15, 20) zugewandte Oberfläche mittels einer Magnetron-Anlage aufgesputtert ist.

21. Isolierglaselement nach Anspruch 19, bei dem die Antireflexbeschichtung beidseitig im Tauchverfahren aufgebracht und anschließend eingebrannt ist.

22. Isolierglaselement nach einem der Ansprüche 1 bis 21 mit einem integrierten, flächigen Heizungssystem (13, 19).

23. Isolierglaselement nach Anspruch 22, mit einem in die absorptive Glasscheibenanordnung (4; 14, 15, 16; 14, 15, 16, 17, 18; 14, 15, 20) integrierten flächigen Heizsystem (13, 19).

24. Isolierglaselement nach Anspruch 22 mit einer zusätzlichen, dem Raum zugekehrten, von der absorptiven Glasscheibenanordnung (14, 15, 16; 14, 15, 16, 17, 18) einen Mindestabstand von 15 mm aufweisenden Glasscheibe, an der das Heizsystem (13, 19) angeordnet ist.

25. Isolierglaselement nach Anspruch 22, 23 oder 24, bei dem die die Emission langwelliger Wärmestrahlung mindernde Beschichtung (13, 19) als elektrische Flächenwiderstandsheizung ausgebildet ist.

26. Isolierglaselement nach Anspruch 22, 23 oder 24, bei dem elektrische Widerstandsheizdrähte in eine Zwischenfolie (16, 18) einer als Verbundglas ausgebildeten absorptiven Glasscheibenanordnung (14, 15, 16; 14, 15, 16, 17, 18) eingelagert sind.

27. Isolierglaselement nach einem der Ansprüche 22 bis 26, bei dem ein Temperaturfühler (21) an der absorptiven Glasscheibenanordnung (4; 14, 15, 16; 14, 15, 16, 17, 18; 14, 15, 20) das Heizsystem (13, 19) einschaltet, wenn die Temperatur der absorptiven Glasscheibenanordnung (4; 14, 15, 16; 14, 15, 16, 17, 18; 14, 15, 20) auf eine vorgebbare Temperatur, insbesondere auf die oder unter die Innenraumtemperatur absinkt oder sie nicht erreicht.

## Claims

1. Insulating glass element for glazing a building, comprising a clear glass pane (11) having an extremely low proportion of iron oxide and a glass pane arrangement (4; 14, 15, 16; 14, 15, 16, 17, 18; 14, 15, 20) formed as a green glass pane, which is arranged at a distance from the former, is predominantly absorptive in the non-visible region of the solar radiation spectrum, has a high thermal storage capacity and whose surface facing the clear glass pane (11) is provided with a coating (13) that reduces the emission of long-wave thermal radiation and is at least twice about as thick as the clear glass pane (11).

2. Insulating glass element according to Claim 1, in which the clear glass pane (11) is 3 to 6 mm thick and the absorptive glass pane arrangement (4; 14, 15, 16; 14, 15, 16, 17, 18; 14, 15, 20) is 6 to 12 mm thick.

3. Insulating glass element according to Claim 1 or 2, in which the absorptive glass pane arrangement (4) is formed as a solid green glass pane.

4. Insulating glass element according to Claim 1 or 2, in which the absorptive glass pane arrangement (14, 15, 16; 14, 15, 16, 17, 18) is formed as an at least two-layer laminated glass with a PVB intermediate film between the glass layers.

5. Insulating glass element according to Claim 4, in which the intermediate film (16; 16, 18) is 1 to 2 mm thick.

6. Insulating glass element according to Claim 1, in which the absorptive glass pane arrangement comprises two spaced-apart glass panes (14, 15) and a fluid (20) which is sealed in between them, is transparent to visible light and has a high thermal storage capacity.

7. Insulating glass element according to Claim 6, in which the fluid (20) consists of water.

8. Insulating glass element according to Claim 7, in which the water (20) has a high proportion of dissolved metal salts.

9. Insulating glass element according to Claim 6, 7 or 8, in which the fluid (20) consists of a homogeneously dispersed hydrogel of high viscosity.

10. Insulating glass element according to one of Claims 6 to 9, in which the clear glass pane (11) is 3 to 6 mm thick and the absorptive glass pane arrangement (4; 14, 15, 16; 14, 15, 16, 17, 18; 14, 15, 20) is 6 to 12 mm thick.

11. Insulating glass element for glazing a building, comprising a clear glass pane (11) and a glass pane arrangement (4; 14, 15, 16; 14, 15, 16, 17, 18; 14, 15, 20) which is arranged at a distance from the former, is predominantly absorptive in the non-visible region of the solar radiation spectrum, has a high storage capacity and whose surface facing the clear glass pane (11) is provided with a coating (13) that reduces the emission of long-wave thermal radiation, is formed as an at least two-layer laminated glass with a PVB intermediate film between the glass layers, in which molecular layers or pigmentations are introduced into the intermediate film (16; 16, 18) as an absorptive medium for the longer-wave, non-visible spectral region and/or the UV component of the sunlight, the glass layers (14, 15; 14, 15, 17) consist of clear glass or float glass and the intermediate film (16; 16, 18) on its own serves as an absorptive medium and the absorptive glass pane arrangement (4; 14, 15, 16; 14, 15, 16, 17, 18; 14, 15, 20) with a high thermal storage capacity is at least twice about as thick as the clear glass pane (11) .

12. Insulating glass element according to Claim 11, in which the clear glass pane (11) is 3 to 6 mm thick and the absorptive glass pane arrangement (4; 14, 15, 16; 14, 15, 16, 17, 18; 14, 15, 20) is 6 to 12 mm thick.

13. Insulating glass element according to Claim 11 or 12, in which the clear glass pane (11) has an extremely low proportion of iron oxide.

14. Insulating glass element according to one of Claims 11 to 13, in which the intermediate film (16; 16, 18) is 1 to 2 mm thick.

15. Insulating glass element according to one of Claims 1 to 14, in which the absorptive glass pane arrangement (4; 14, 15, 16; 14, 15, 16, 17, 18; 14, 15, 20) has at least one glass pane or glass layer of toughened or partly toughened glass.

16. Insulating glass element according to one of Claims 1 to 15, in which the spacing between the clear glass pane (11) and the absorptive glass pane arrangement (4; 14, 15, 16; 14, 15, 16, 17, 18; 14, 15, 20) is about 8 to 16 mm and is filled with a noble gas, preferably krypton.

17. Insulating glass element according to one of Claims 1 to 16, in which, in addition, the outwardly facing surface of the absorptive glass pane arrangement (14, 15, 16, 17, 18) is provided with a coating (19) (low-E coating) that reduces the emission of long-wave thermal radiation.

18. Insulating glass element according to Claim 17, in which the surface facing the gas-filled interspace (12) is coated by means of cathode sputtering, and the outwardly facing surface is coated pyrolytically.

19. Insulating glass element according to one of Claims 1 to 18, in which at least one surface of the clear glass pane (11) is provided with an antireflection coating.

20. Insulating glass element according to Claim 19, in which the antireflection coating is sputtered onto the surface facing the absorptive glass pane arrangement (4; 14, 15, 16; 14, 15, 16, 17, 18; 14, 15, 20), as an interference coating, by means of a magnetron system.

21. Insulating glass element according to Claim 19, in which the antireflection coating is applied to both sides in the dip process and is then fired.

22. Insulating glass element according to one of Claims 1 to 21, with an integrated, flat heating system (13, 19).

23. Insulating glass element according to Claim 22, with a flat heating system (13, 19) integrated into the absorptive glass pane arrangement (4; 14, 15, 16; 14, 15, 16, 17, 18; 14, 15, 20).

24. Insulating glass element according to Claim 22 with an additional glass pane which faces the room, has a minimum spacing of 15 mm from the absorptive glass pane arrangement (14, 15, 16; 14, 15, 16, 17, 18) and on which the heating system (13, 19) is arranged.

25. Insulating glass element according to Claim 22, 23 or 24, in which the coating (13, 19) that reduces the emission of long-wave thermal radiation is formed as an electrical surface resistance heater.

26. Insulating glass element according to Claim 22, 23 or 24, in which electrical resistance heating wires are inlaid in an intermediate film (16, 18) of an absorptive glass pane arrangement (14, 15, 16; 14, 15, 16, 17, 18) formed as laminated glass.

27. Insulating glass element according to one of Claims 22 to 26, in which a temperature sensor (21) on the absorptive glass pane arrangement (4; 14, 15, 16; 14, 15, 16, 17, 18; 14, 15, 20) switches on the heating system (13, 19) when the temperature of the absorptive glass pane arrangement (4; 14, 15, 16; 14, 15, 16, 17, 18; 14, 15, 20) falls to a predefinable temperature, in particular to or below the internal room temperature, or does not reach it.

## Revendications

1. Elément vitré isolant pour vitrage de bâtiment, constitué d'une vitre (11) en verre blanc dont la teneur en oxyde de fer est extrêmement faible et d'un système de vitres (4; 14, 15, 16; 14, 15, 16, 17, 18; 14, 15, 20) disposé à distance de la première, formé principalement de vitres en verre vert qui absorbent la partie non visible du spectre du rayonnement solaire, à haute capacité calorifique, dont la surface tournée vers la vitre (11) en verre blanc est dotée d'un revêtement (13) qui diminue l'émission de rayonnement thermique à longue longueur d'onde et dont l'épaisseur représente sensiblement le double de celle de la vitre (11) en verre blanc.

2. Elément vitré isolant selon la revendication 1, dans lequel la vitre (11) en verre blanc a une épaisseur de 3 à 6 mm et le système de vitrage absorbant (4; 14, 15, 16; 14, 15, 16, 17, 18; 14, 15, 20) a une épaisseur de 6 à 12 mm.

3. Elément vitré isolant selon les revendications 1 ou 2, dans lequel le système de vitrage absorbant (4) est configuré comme vitre massive en verre vert.

4. Elément vitré isolant selon les revendications 1 ou 2, dans lequel le système de vitrage absorbant (14, 15, 16; 14, 15, 16, 17, 18) est configuré comme verre feuilleté en au moins deux couches dotées d'une feuille intermédiaire en PVB entre les couches de verre.

5. Elément vitré isolant selon la revendication 4, dans lequel la feuille intermédiaire (16; 16, 18) a une épaisseur de 1 à 2 mm.

6. Elément vitré isolant selon la revendication 1, dans lequel le système de vitrage absorbant est constitué de deux vitres (14, 15) maintenues à distance l'une de l'autre et entre lesquelles un fluide (20) transparent à la lumière visible et à haute capacité calorifique est disposé de manière étanche.

7. Elément vitré isolant selon la revendication 6, dans lequel le fluide (20) est constitué d'eau.

8. Elément vitré isolant selon la revendication 7, dans lequel l'eau (20) présente une teneur élevée en sels métalliques dissous.

9. Elément vitré isolant selon les revendications 6, 7 ou 8, dans lequel le fluide (20) est constitué d'un hydrogel à dispersion homogène et haute viscosité.

10. Elément vitré isolant selon l'une des revendications 6 à 9, dans lequel la vitre (11) en verre blanc a une épaisseur de 3 à 6 mm et le système de vitrage absorbant (4; 14, 15, 16; 14, 15, 16, 17, 18; 14, 15, 20) une épaisseur de 6 à 12 mm.

11. Elément vitré isolant pour vitrage de bâtiment, constitué d'une vitre (11) en verre blanc dont la teneur en oxyde de fer est extrêmement faible et d'un système de vitres (4; 14, 15, 16; 14, 15, 16, 17, 18; 14, 15, 20) disposé à distance de la première, formé principalement de vitres en verre vert qui absorbent la partie non visible du spectre du rayonnement solaire, à haute capacité calorifique, dont la surface tournée vers la vitre (11) en verre blanc est dotée d'un revêtement (13) qui diminue l'émission de rayonnement thermique à longue longueur d'onde et configuré comme verre feuilleté en au moins deux couches qui est doté d'une feuille intermédiaire en PVB entre les couches de verre, des revêtements moléculaires ou des pigments étant placés dans la feuille intermédiaire (16; 16, 18) comme agents d'absorption de la partie non visible et à longue longueur d'onde et/ou de la fraction UV du spectre de la lumière solaire, les couches de verre (14, 15; 14, 15, 17) étant constituées de verre blanc ou de verre flotté et la couche intermédiaire (16; 16, 18) servant uniquement d'agent d'absorption, l'épaisseur du système de vitrage absorbant (4; 14, 15, 16; 14, 15, 16, 17, 18; 14, 15, 20) à haute capacité calorifique représentant sensiblement le double de l'épaisseur de la vitre (11) en verre blanc.

12. Elément vitré isolant selon la revendication 11, dans lequel la vitre (11) en verre blanc a une épaisseur de 3 à 6 mm et le système de vitrage absorbant (4; 14, 15, 16; 14, 15, 16, 17, 18; 14, 15, 20) une épaisseur de 6 à 12 mm.

13. Elément vitré isolant selon les revendications 11 ou 12, dans lequel la vitre (11) en verre blanc présente une teneur extrêmement faible en oxyde de fer.

14. Elément vitré isolant selon l'une des revendications 11 à 13, dans lequel la feuille intermédiaire (16; 16, 18) a une épaisseur de 1 à 2 mm.

15. Elément vitré isolant selon l'une des revendications 1 à 14, dans lequel le système de vitrage absorbant (4; 14, 15, 16; 14, 15, 16, 17, 18; 14, 15, 20) présente au moins une vitre ou une couche de verre en verre trempé ou partiellement trempé.

16. Elément vitré isolant selon l'une des revendications 1 à 15, dans lequel la distance entre la vitre (11) en verre blanc et le système de vitrage absorbant (4; 14, 15, 16; 14, 15, 16, 17, 18; 14, 15, 20) est d'environ 8 à 16 mm et est remplie d'un gaz rare, de préférence le krypton.

17. Elément vitré isolant selon l'une des revendications 1 à 16, dans lequel la surface tournée vers l'extérieur du système de vitrage absorbant (14, 15, 16, 17, 18) est dotée d'un revêtement (19) qui diminue l'émission de rayonnement thermique à grande longueur d'onde (revêtement à faible E).

18. Elément vitré isolant selon la revendication 17, dans lequel la surface tournée vers l'espace intermédiaire (12) rempli de gaz est revêtue par pulvérisation cathodique et la surface tournée vers l'extérieur par pyrolyse.

19. Elément vitré isolant selon l'une des revendications 1 à 18, dans lequel au moins une surface de la vitre (11) en verre blanc est dotée d'un revêtement antiréfléchissant.

20. Elément vitré isolant selon la revendication 19, dans lequel le revêtement antiréfléchissant configuré comme revêtement à interférence est pulvérisé au moyen d'une installation à magnétron sur la surface tournée vers le système de vitrage absorbant (4; 14, 15, 16; 14, 15, 16, 17, 18; 14, 15, 20).

21. Elément vitré isolant selon la revendication 19, dans lequel le revêtement antiréfléchissant est appliqué sur les deux faces par un procédé par immersion et est ensuite cuit.

22. Elément vitré isolant selon l'une des revendications 1 à 21, doté d'un système intégré de chauffage plat (13, 19).

23. Elément vitré isolant selon la revendication 22, doté d'un système plat de chauffage (13, 19) intégré dans le système de vitrage absorbant (4; 14, 15, 16; 14, 15, 16, 17, 18; 14, 15, 20).

24. Elément vitré isolant selon la revendication 22, doté d'une vitre supplémentaire, orientée vers le local, présentant par rapport au système de vitrage absorbant (14, 15, 16; 14, 15, 16, 17, 18) une distance minimale de 15 mm et sur laquelle est disposé le système de chauffage (13, 19).

25. Elément vitré isolant selon les revendications 22, 23 ou 24, dans lequel le revêtement (13, 19) qui diminue l'émission de rayonnement thermique à grande longueur d'onde est configuré comme surface de chauffage par résistance électrique.

26. Elément vitré isolant selon les revendications 22, 23 ou 24, dans lequel les fils de chauffage par résistance électrique sont incorporés dans une feuille intermédiaire (16, 18) d'un système de vitrage absorbant (14, 15, 16; 14, 15, 16, 17, 18) configuré comme vitrage feuilleté.

27. Elément vitré isolant selon l'une des revendications 22 à 26, dans lequel une sonde de température (21) placée sur le système de vitrage absorbant (4; 14, 15, 16; 14, 15, 16, 17, 18; 14, 15, 20) branche le système de chauffage (13, 19) lorsque la température du système de vitrage absorbant (4; 14, 15, 16; 14, 15, 16, 17, 18; 14, 15, 20) descend à une valeur prédéterminée, en particulier la température intérieure du local, ou ne l'atteint pas.
